(19) Europäisches Patentamt

European Patent Office

Office européen des brevets

(11) **EP 1 356 603 B1**

(12) **EUROPÄISCHE PATENTSCHRIFT**

(45) Veröffentlichungstag und Bekanntmachung des Hinweises auf die Patenterteilung:
**04.05.2005 Patentblatt 2005/18**

(21) Anmeldenummer: **01985808.3**

(22) Anmeldetag: **28.12.2001**

(51) Int Cl.7: **H04B 1/713**

(86) Internationale Anmeldenummer:
**PCT/DE2001/004961**

(87) Internationale Veröffentlichungsnummer:
**WO 2002/061964 (08.08.2002 Gazette 2002/32)**

(54) **FREQUENZSCHEMA FÜR DATENÜBERTRAGUNGSSYSTEME**

FREQUENCY SCHEME FOR DATA TRANSMISSION SYSTEMS

SCHEMA DE FREQUENCE DE SYSTEMES DE TRANSMISSION DE DONNEES

(84) Benannte Vertragsstaaten:
**AT BE CH CY DE DK ES FI FR GB GR IE IT LI LU MC NL PT SE TR**

(30) Priorität: **30.01.2001 DE 10103926**

(43) Veröffentlichungstag der Anmeldung:
**29.10.2003 Patentblatt 2003/44**

(73) Patentinhaber: **Infineon Technologies AG 81669 München (DE)**

(72) Erfinder:
  • **BOETZEL, Ulrich 41564 Kaarst (DE)**
  • **NEUBAUER, Andre 47807 Krefeld (DE)**
  • **KRANZ, Christian 40885 Ratingen Lintorf (DE)**

(74) Vertreter: **Lange, Thomas, Dr. et al Patentanwälte Lambsdorff & Lange, Dingolfinger Strasse 6 81673 München (DE)**

(56) Entgegenhaltungen:
**US-A- 5 887 023**

  • **PATENT ABSTRACTS OF JAPAN vol. 017, no. 183 (E-1348), 9. April 1993 (1993-04-09) & JP 04 334222 A (JAPAN RADIO CO LTD), 20. November 1992 (1992-11-20)**

**Beschreibung**

Die Erfindung betrifft ein Datenübertragungssystem, welches mindestens zwei Stationen umfasst, zwischen denen Datenbursts 'über Funk ausgetauscht werden. Außerdem betrifft die Erfindung ein Verfahren zur Datenübertragung zwischen mindestens zwei Stationen über Funkstrecken unter Verwendung eines Frequenzsprungverfahrens.

Derartige Datenübertragungssysteme kommen immer dann zur Anwendung, wenn Daten über kurze Distanzen über Funk ausgetauscht werden sollen, also beispielsweise beim Datenaustausch zwischen dem Basisteil und dem Mobilteil eines schnurlosen Telefons. Andere Beispiele betreffen den Datenaustausch zwischen PC und Peripheriegeräten, zwischen dem Gamepad einer Spielekonsole und der zugehörigen Feststation, etc.

Für derartige digitale schnurlose Kommunikationssysteme wie z.B. WDCT, Bluetooth, HomeRF sind verschiedene lizenzfreie Frequenzbereiche reserviert, die sog. ISM-Frequenzbereiche (Industrial Scientific and Medical), z.B. bei 2,4 GHz.

Eine Datenübertragung von der Basisstation zu den Mobilstationen wird Downlink genannt. Der umgekehrte Fall der Datenübertragung von den Mobilstationen zur Basisstation wird als Uplink bezeichnet. Üblicherweise werden Datenbursts zwischen den Stationen entsprechend einem Zeitschlitzverfahren beziehungsweise TDMA-Verfahren (Time Division Multiple Access) ausgetauscht.

Für die Nutzung der ISM-Frequenzbänder hat die zuständige Normungsbehörde, die Federal Communication Commission (FCC), Regeln aufgestellt, in welcher Weise der Datenaustausch zu erfolgen hat. Eine dieser Regeln besagt, dass die drahtlose Datenübertragung entsprechend einem Frequenzsprungverfahren (Frequency Hopping Spread Spectrum) zu erfolgen hat. Außerdem wird festgelegt, wie viele Frequenzwechsel innerhalb bestimmter Zeitspannen durchgeführt werden müssen.

Um die erforderlichen Wechsel der Übertragungsfrequenz realisieren zu können, müssen die sender- und empfängerseitigen lokalen Oszillatoren jeweils auf neue Oszillatorfrequenzen eingeschwungen werden. Jede Änderung der Übertragungsfrequenz bedingt Einschwingzeiten der Frequenzsynthesizer auf die jeweilige neue Übertragungsfrequenz. Diesen Einschwingzeiten muss durch Schutzzeitintervalle zwischen den übertragenen Datenbursts Rechnung getragen werden, und dies verringert die Datenübertragungsrate.

In dem Patent Abstract of Japan JP 04 334222 A ist ein Sendeund Empfangssystem beschrieben, welches zwei Frequenzsynthesizer umfasst, wobei der eine Frequnzsynthesizer für das Heraufmischen des zu sendenden Signals im Sendeteil und der andere Frequenzsynthesizer für das Herabmischen des empfangenen Signals im Empfangsteil zuständig sind.

Aufgabe der Erfindung ist es daher, ein Datenübertragungssystem sowie ein Verfahren zur Datenübertragung unter Verwendung eines Frequenzsprungverfahrens zur Verfügung zu stellen, welches eine höhere Datenübertragungsrate bei vereinfachter Funktionsweise ermöglicht.

Das erfindungsgemäße Datenübertragungssystem umfasst mindestens zwei Stationen, zwischen denen Datenbursts über Funk ausgetauscht werden. Die erste Station weist erste Sendemittel auf, welche Datenbursts vom Basisband auf eine erste Kanalmittenfrequenz heraufmischen und senden, sowie erste Empfangsmittel, welche Datenbursts auf einer zweiten Kanalmittenfrequenz empfangen und auf eine Zwischenfrequenz herabmischen. Die zweite Station umfasst zweite Sendemittel, welche Datenbursts vom Basisband auf die zweite Kanalmittenfrequenz heraufmischen und senden, sowie zweite Empfangsmittel, welche Datenbursts auf der ersten Kanalmittenfrequenz empfangen und auf die Zwischenfrequenz herabmischen. Dabei weist die erste Station einen lokalen Oszillator auf, welcher die für das Heraufmischen vom Basisband auf die erste Kanalmittenfrequenz und die für das Herabmischen von der zweiten Kanalmittenfrequenz auf die Zwischenfrequenz benötigte lokale Frequenz erzeugt. Die zweite Station weist einen lokalen Oszillator auf, welcher die für das Heraufmischen vom Basisband auf die zweite Kanalmittenfrequenz und die für das Herabmischen von der ersten Kanalmittenfrequenz auf die Zwischenfrequenz benötigte lokale Frequenz erzeugt.

Gemäß der Erfindung entspricht die Differenz der für die Hinübertragung von der ersten zur zweiten Zwischenstation verwendeten ersten Kanalmittenfrequenz und der für die Rückübertragung von der zweiten zur ersten Station verwendeten zweiten Kanalmittenfrequenz der verwendeten Zwischenfrequenz.

Der Vorteil einer derartigen Wahl der beiden Übertragungsfrequenzen ist, dass die jeweiligen lokalen Oszillatorfrequenzen der ersten und der zweiten Station zwischen der Hinübertragung und der Rückübertragung nicht mehr umgestellt werden müssen, wie dies bisher notwendig war. Zwischen der Hinübertragung von der ersten zur zweiten Station und der Rückübertragung von der zweiten zur ersten Station ist keine Umstellung der lokalen Oszillatoren mehr erforderlich. Aus diesem Grund kann die Einschwingphase zwischen der Hin- und der Rückübertragung entfallen, und das entsprechende Schutzzeitintervall kann verkürzt werden. Dadurch werden höhere Datenübertragungsraten ermöglicht als bisher.

Mit anderen Worten muss bei der Datenübertragung zwischen zwei Stationen ein senderseitiges Basisbandsignal zunächst mittels einer senderseitigen Oszillatorfrequenz auf die erste Kanalmittenfrequenz heraufgemischt werden. In der zweiten Station wird das auf der ersten Kanalmittenfrequenz empfangene Signal durch eine empfängerseitige Oszillatorfrequenz auf eine Zwischenfrequenz herabgemischt, und auf dieser Zwischenfrequenz erfolgt dann die weitere Signalauswertung. Die in der zweiten Station zum Herabmischen verwendete lokale Oszillatorfrequenz wird erfindungsgemäß auch zum Heraufmischen des zurückzusendenden Signals vom Basisband auf die zweite Kanalmittenfrequenz verwendet. Da sich das Basisbandsignal und das Zwischenfrequenzsignal genau um die Zwischenfrequenz Δf unterscheiden, ergibt sich zwischen der ersten Kanalmittenfrequenz und der zweiten Kanalmittenfrequenz ein Frequenzsprung von der Größe der Zwischenfrequenz.

Das auf der zweiten Kanalmittenfrequenz rückübertragene Signal kann in der ersten Station empfangen und mit der dort vorliegenden unveränderten Oszillatorfrequenz auf die Zwischenfrequenz herabgemischt werden. Im Verlauf einer Hin- und Rückübertragung ist daher weder auf Seiten der ersten noch der zweiten Station eine Veränderung der lokalen Oszillatorfrequenz notwendig. Dennoch unterscheidet sich die erste Kanalmittenfrequenz von der zweiten Kanalmittenfrequenz, und zwar genau um die Zwischenfrequenz. Insofern können die Vorgabe der FCC, innerhalb bestimmter Zeitspannen eine Mindestanzahl von Frequenzwechseln vorzunehmen, mit einer geringeren Zahl von Umstellungen der lokalen Oszillatorfrequenz erfüllt werden. Dadurch vereinfacht sich auch die Steuerung für die lokalen Oszillatoren.

Es ist von Vorteil, wenn die erste Kanalmittenfrequenz pseudozufällig gewählt wird. Hierzu ist sender- und empfängerseitig eine übereinstimmende Frequenzsprungfolge festgelegt. Aus der jeweiligen pseudozufällig ermittelten ersten Kanalmittenfrequenz ergibt sich dann durch Addition oder durch Subtraktion der Zwischenfrequenz die darauffolgende zweite Kanalmittenfrequenz.

Es ist von Vorteil, wenn die Datenübertragung entsprechend einem Frequenzsprungverfahren erfolgt, wobei die Kanalmittenfrequenz nach jedem übermittelten Datenburst geändert wird. Außerdem ist es vorteilhaft, wenn die Kanalmittenfrequenz während der Übertragung eines Datenbursts konstant bleibt. Auf diese Weise ist gewährleistet, dass während eines Datenbursts kein Wechsel der Übertragungsfrequenz vorgenommen werden muss. Der Wechsel der Übertragungsfrequenz und gegebenenfalls das Neueinschwingen der Frequenzsynthesizer kann insofern während der Pausen zwischen zwei Datenbursts erfolgen.

Gemäß einer weiteren vorteilhaften Ausführungsform der Erfindung wird als Zwischenfrequenz (beziehungsweise als Differenz zwischen erster und zweiter Kanalmittenfrequenz) ein nichtganzzahliges Vielfaches des Kanalabstands (zum Beispiel 1 MHz beim 2,4 Ghz-Frequenzband) gewählt. Dies führt zu einem gegeneinander versetzten Raster von Sende- und Empfangsfrequenzen. Dadurch kann ein Übersprechen zwischen verschiedenen Kanälen vermieden werden, und es kommt zu einer Verringerung der Gleich- und Nachbarkanalstörungen.

Es ist insbesondere von Vorteil, wenn die lokalen Oszillatoren mittels eines Phasenregelkreises frequenzstabilisiert werden. Mit einer derartigen Anordnung lassen sich die in den verschiedenen Sende- und Empfangsgeräten benötigten Mischfrequenzen bei geringem baulichen Aufwand mit der notwendigen Genauigkeit erzeugen.

Gemäß einer weiteren vorteilhaften Ausführungsform der Erfindung weist das Datenübertragungssystem Mittel zum Erzeugen von Schutzzeitintervallen zwischen den verschiedenen Datenbursts auf. Ein Grund für die Notwendigkeit, Schutzzeitintervalle zwischen den verschiedenen Datenbursts vorzusehen, ergibt sich aus den Taktabweichungen zwischen den auf verschiedenen Stationen befindlichen lokalen Oszillatoren. Derartige beispielsweise durch Taktdrift verursachte Taktabweichungen können zu einem Überlapp zwischen verschiedenen Datenbursts führen. Um zu verhindern, dass noch während des Sendens eines ersten Datenbursts ein zweiter Datenbursts empfangen wird, müssen entsprechend dimensionierte Schutzzeitintervalle vorgesehen werden. Falls zwischen zwei Datenbursts eine Umstellung der lokalen Oszillatorfrequenz erforderlich ist, muss ein längeres Schutzzeitintervall vorgesehen werden, dessen Dauer zumindest der Dauer des Binschwingvorgangs entspricht.

Es ist von Vorteil, wenn die Länge des Schutzzeitintervalls zwischen der Hinübertragung von der ersten zur zweiten Station und der Rückübertragung von der zweiten zur ersten Station in etwa der Taktdrift der jeweiligen Oszillatoren entspricht. Bei der erfindungsgemäßen Lösung entfällt die Neueinstellung der lokalen Oszillatorfrequenz zwischen Hin- und Rückübertragung. Daher kann das erforderliche Schutzzeitintervall kürzer gewählt werden als bei bisherigen Lösungen, bei denen ein Neueinschwingen der lokalen Oszillatoren erforderlich war.

Gemäß einer weiteren vorteilhaften Lösung weisen die Stationen Mittel zur Erzeugung einer Identifizierungsinformation (CAC) zu Beginn der Übertragung jedes Datenbursts auf. Anhand dieser Identifizierungsinformation kann bei einem empfangenen Datenburst festgestellt werden, ob dieser zum gleichen Pikonetz gehört wie die Empfängerstation, oder ob dies nicht der Fall ist.

Gemäß einer weiteren vorteilhaften Ausgestaltung der Erfindung handelt es sich bei einer der Stationen um eine Basisstation, bei der anderen um eine Mobilstation. Viele Datenübertragungssysteme verfügen über ein kleines, leicht handhabbares Mobilteil. Dabei kann es sich um einen Telefonhörer, um ein Gamepad, um einen organizer etc. handeln, über das die Eingaben des Benutzers vorgenommen werden.

Insbesondere ist. es von Vorteil, wenn das Datenübertragungssystem in schnurlosen Kommunikationssystemen eingesetzt wird. Außerdem ist es von Vorteil, wenn das Datenübertragungssystem in computergesteuerten Spielesystemen eingesetzt wird.

Bei dem erfindungsgemäßen Verfahren zur Datenübertragung zwischen mindestens zwei Stationen über Funkstrecken unter Verwendung eines Frequenzsprungverfahrens wird zunächst ein erstes Signal vom Basisband heraufgemischt und auf einer ersten Kanalmittenfrequenz von einer ersten Station zu einer zweiten Station gesendet, wobei die für das Heraufmischen vom Basisband auf die erste Kanalmittenfrequenz und die für das Herabmischen von der zweiten Kanalmittenfrequenz auf die Zwischenfrequenz benötigte lokale Frequenz von einem lokalen Oszillator der ersten Station erzeugt wird. Das erste Signal wird durch die zweite Station empfangen und auf eine Zwischenfrequenz herabgemischt. Anschließend mischt die zweite Station ein zweites Signal vom Basisband herauf und sendet es auf einer zweiten Kanalmittenfrequenz zu der ersten Station, wobei die für das Heraufmischen vom Basisband auf die zweite Kanalmittenfrequenz und die für das Herabmischen von der ersten Kanalmittenfrequenz auf die Zwischenfrequenz benötigte lokale Frequenz von einem lokalen Oszillator der zweiten Station zeugt wird. Erfindungsgemäß unterscheiden sich die erste Kanalmittenfrequenz und die zweite Kanalmittenfrequenz genau um die Zwischenfrequenz. Das zweite Signal wird durch die erste Station empfangen und auf die Zwischenfrequenz herabgemischt. Wenn die erste Kanalmittenfrequenz und die zweite Kanalmittenfrequenz entsprechend der Erfindung gewählt werden, kann die zeitaufwendige Neueinstellung der Oszillatorfrequenzen sowohl auf Sender- als auch auf Empfängerseite entfallen.

Nachfolgend wird die Erfindung anhand eines in der'Zeichnung ' dargestellten Ausführungsbeispiels weiter beschrieben. Es zeigen:

Fig. 1      ein aus einer Basisstation und vier Mobilstationen bestehendes Datenübertragungssystem;

Fig. 2      die zum Datenaustausch zwischen Basisstation und Mobilstationen verwendete Burststruktur;

Fig. 3A      ein Frequenzschema der sender- und empfangsseitigen lokalen Oszillatorfrequenzen sowie der verwendeten Übertragungsfrequenzen; und

Fig. 3B      ein alternatives Frequenzschema zu dem Schema nach Fig. 3A.

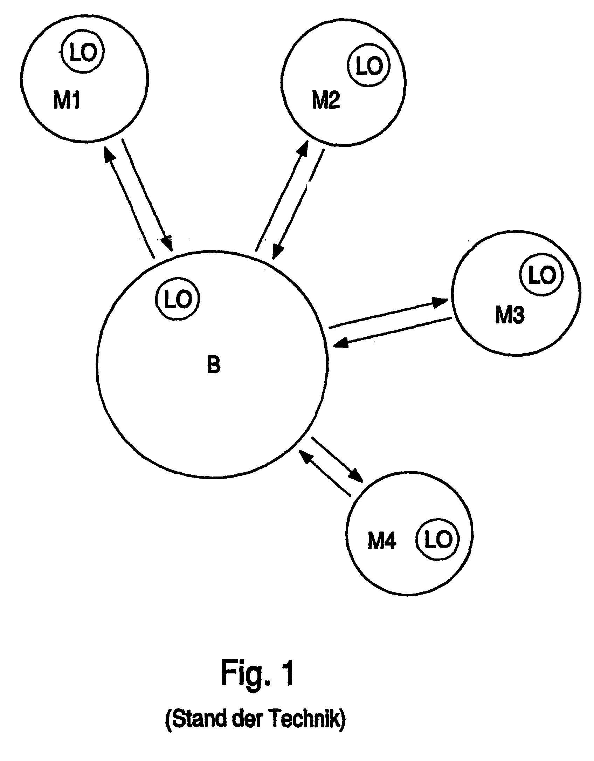

Fig. 1 zeigt ein Datenübertragungssystem, welches eine Basisstation B und beispielsweise 4 Mobilstationen Mi (i = 1, ..., 4) umfasst. Die Basisstation B kann Daten über Funk an jede der Mobilstationen Mi übertragen. Ebenso können die Mobilstation Mi Daten über Funk an die Basisstation B übertragen. Zur Datenübertragung über Funk stehen der Basisstation B und den Mobilstationen Mi jeweils ein lokaler Oszillator LO zur Verfügung. Ein solches Datenübertragungssystem bestehend aus einer Basisstation und N Mobilstationen wird als Pikonetz bezeichnet und weist nur eine geringe Reichweite auf.

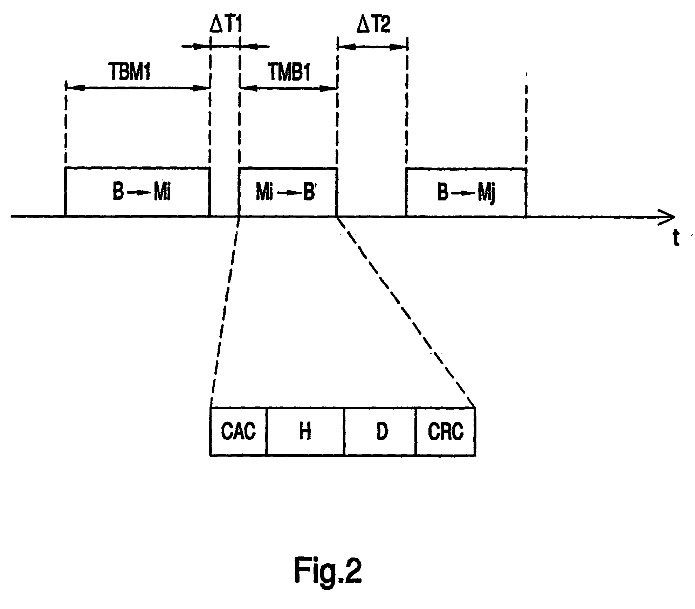

In Fig. 2 ist der Austausch von Datenbursts zwischen der Basisstation B und den Mobilstationen Mi, Mj im zeitlichen Verlauf dargestellt. Zunächst wird ein Datenburst "B→Mi" von der Basisstation B zur Mobilstation Mi übertragen (Downlink).

Die Datenübertragung erfolgt auf der Kanalmittenfrequenz $f_{2n}$; die Übertragungszeitdauer beträgt TBM1. An die Übertragung dieses n-ten Downlink-Datenbursts schließt sich ein Schutzzeitintervall $\Delta T1$ an, während dem keine Datenübertragung stattfindet. Anschließend wird der Uplink-Datenburst "Mi→B" von der Mobilstation Mi zur Basisstation B rückübertragen. Bei der erfindungsgemäß0en Lösung wird für diese Rückübertragung die Kanalmittenfrequenz $f_{2n+1}$ verwendet, die sich bei der erfindungsgemäßen Lösung um die Zwischenfrequenz $\Delta f$ von der vorher verwendeten Kanalmittenfrequenz $f_{2n}$ unterscheidet. Die Übertragungsdauer des n-ten Uplink-Datenbursts "Mi→B" beträgt TMB1. An die Übertragung dieses Datenbursts schließt sich das Schutzzeitintervall $\Delta T2$ an.

Die erfindungsgemäße Lösung erlaubt es, für die Übertragung der Datenbursts "B→Mi" und "Mi→B" unterschiedliche Frequenzen zu verwenden und somit dem Erfordernis häufiger Frequenzwechsel gemäß den Standards der FCC zu entsprechen, ohne die lokalen Oszillatoren während des Schutzzeitintervalls $\Delta T1$ neu einschwingen zu müssen. Die Länge des Schutzzeitintervalls $\Delta T1$ ist daher so dimensioniert, dass Taktabweichungen zwischen Sender und Empfänger kompensiert werden können, um so einen Überlapp der Datenbursts zu verhindern.

Während des Schutzzeitintervalls $\Delta T2$ werden die sender- und empfängerseitigen lokalen Oszillatoren dann auf neue Frequenzen eingestellt. Diese Frequenzen werden pseudozufällig gemäß einem vorgegebenen Frequenzsprungschema gewählt. Damit zu Beginn der Übertragung des Datenbursts "B→Mi" eine stabile lokale Oszillatorfrequenz zur Verfügung steht, wird die Dauer des Schutzzeitintervalls $\Delta T2$ entsprechend der Einschwingdauer der Phasenregelkreise (PLL, Phase Locked Loop) gewählt. Der Vorteil der erfindungsgemäßen Lösung ist daher, dass $\Delta T1$ kleiner als $\Delta T2$ gewählt werden kann.

Jeder der in Fig. 2 gezeigten Datenbursts umfasst verschiedene Gruppen von Daten und Informationen. Beispielsweise werden im Bluetooth-Standard zu Beginn eines Datenbursts Identifizierungsinformationen CAC (Channel Access Code) des Pikonetzes gesendet, danach folgt der eigentliche, zu übertragende Datenblock mit Header-Informationen H, Nutzdaten D und einem Kontrollbitmuster CRC (Cyclic Redundancy Check) zur Fehlererkennung und -korrektur der übertragenen Nutzdaten D'.

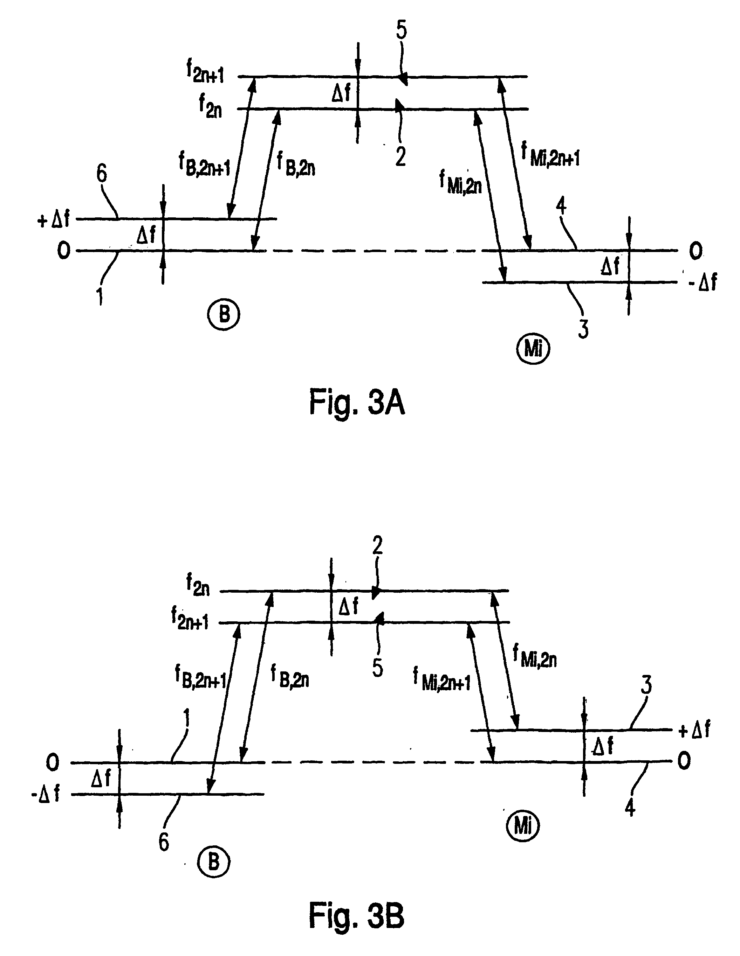

In den Fig. 3A und 3B sind zwei alternative Frequenzschemata für die Datenübertragung zwischen der Basisstation B und der Mobilstation Mi gezeigt.

Es soll zunächst auf den anhand von Fig. 3A dargestellten Fall eingegangen werden. Auf Seiten der Basisstation B liegt das zu übertragende Signal als Basisbandsignal 1 vor, das in einem ersten Datenburst "B→Mi" zu der Mobilstation Mi übertragen werden soll. Dazu wird das Basisbandsignal 1 mittels der auf Seiten der Basisstation vorliegenden lokalen Oszillatorfrequenz $f_{B,2n}$ auf die Übertragungsfrequenz $f_{2n}$ hochgemischt. Diese Übertragungsfrequenz $f_{2n}$ wird zur Hinübertragung 2 von der Basisstation zur Mobilstation verwendet. Das von der Mobilstation Mi empfangene Hochfrequenzsignal wird durch die auf Seiten der Mobilstation erzeugte lokale Oszillatorfrequenz $f_{Mi,2n}$ auf das Zwischenfrequenzband 3 heruntergemischt, das sich bei der Frequenz $-\Delta f$ befindet. Dieses Zwischenfrequenzsignal wird dann weiter ausgewertet.

Bei der Rückübertragung soll das auf Seiten der Mobilstation Mi vorliegende Basisbandsignal 4 zu der Basisstation B übertragen werden. Dazu wird es durch die lokale Oszillatorfrequenz $f_{Mi,2n+1}$ auf die für die Übertragung verwendete Frequenz $f_{2n+1}$ hochtransformiert.

Dabei soll gelten

$$f_{Mi,2n} = f_{Mi,2n+1}$$

damit der lokale Oszillator auf Seiten der Mobilstation nicht auf eine neue Frequenz eingeschwungen werden muss. Die Rückübertragung 5 von der Mobilstation Mi zur Basisstation B erfolgt dann mit der Übertragungsfrequenz $f_{2n+1}$. Da sich auf Seiten der Mobilstation das Zwischenfrequenzsignal 3 vom Basisbandsignal 4 um die Frequenz $\Delta f$ unterscheidet, müssen sich auch die für die Hinübertragung 2 und die Rückübertragung 5 verwendeten Übertragungsfrequenzen um genau Af unterscheiden:

$$f_{2n+1} = f_{2n} + \Delta f$$

Das auf der Übertragungsfrequenz $f_{2n+1}$ rückübertragene Signal wird von der Basisstation B empfangen und durch die dortige lokale Oszillatorfrequenz $f_{B,2n+1}$ auf das Zwischenfrequenzband heruntergemischt. Das so erhaltene Zwischenfrequenzsignal 6 kann dann weiterverarbeitet werden.

Auch auf Seiten der Basisstation soll ein Umschwingen des lokalen Oszillators vermieden werden. Deshalb muss gelten:

$$f_{B,2n} = f_{B,2n+1}$$

Dies ist dann erfüllbar, wenn die Zwischenfrequenz auf Seiten der Basisstation $+\Delta f$ beträgt.

In Fig. 3B ist ein alternatives Frequenzschema gezeigt. Das auf Seiten der Basisstation vorliegende Basisbandsignal 1 wird mittels der lokalen Oszillatorfrequenz $f_{B,2n}$ auf die Übertragungsfrequenz $f_{2n}$ hochgemischt und als Datenburst "B→Mi" zur Mobilstation Mi übertragen. Die Mobilstation Mi empfängt dieses Hochfrequenzsignal und mischt es mittels der lokalen Oszillatorfrequenz $f_{Mi,2n}$ auf ein Zwischenfrequenzsignal 3 mit der Frequenz $\Delta f$ herunter.

Für die Rückübertragung des Datenbursts "Mi→B" wird das Basisbandsignal 4 mittels der lokalen Oszillatorfrequenz $f_{Mi,2n+1}$ auf die für die Rückübertragung 5 verwendete Übertragungsfrequenz $f_{2n+1}$ hochgemischt. Zwischen Hinübertragung 2 und Rückübertragung 5 wird die lokale Oszillatorfrequenz der Mobilstation Mi nicht verstellt, und deshalb gilt

$$f_{Mi,2n} = f_{Mi,2n+1}$$

Daraus ergibt sich folgender Zusammenhang zwischen der Frequenz $f_{2n}$ für die Hinübertragung 2 und der Frequenz $f_{2n+1}$ für die Rückübertragung 5:

$$f_{2n+1} = f_{2n} - \Delta f$$

Das auf der Übertragungsfrequenz $f_{2n+1}$ rückübertragene Signal wird durch die Basisstation empfangen und mittels der lokalen Oszillatorfrequenz $f_{B,2n+1}$ auf das Zwischenfrequenzband bei der Frequenz $-\Delta f$ heruntergemischt. Für die lokalen Oszillatorfrequenzen $f_{B,2n}$ und $f_{B,2n+1}$ gilt

$$f_{B,2n} = f_{B,2n+1}$$

Daher entfällt auch auf Seiten der Basisstation das Neueinschwingen des lokalen Oszillators zwischen Hin- und Rückübertragung. Das Zwischenfrequenzsignal 6 kann dann empfängerseitig weiter verarbeitet werden.

Zusammenfassend kann man also feststellen, dass eine Umstellung der lokalen Oszillatoren zwischen Hin- und Rückübertragung dann entfallen kann, wenn sich die Übertragungsfrequenz für die Hinübertragung $f_{2n}$ und die Frequenz für die Rückübertragung $f_{2n+1}$ um die Zwischenfrequenz $\Delta f$ unterscheiden.

**Patentansprüche**

1. Datenübertragungssystem, welches mindestens zwei Stationen (B, Mi) umfasst, zwischen denen Datenbursts (B→Mi, Mi→B) über Funk ausgetauscht werden, welches aufweist

- eine erste Station (B), mit ersten Sendemitteln, welche Datenbursts (B→Mi) vom Basisband auf eine erste Kanalmittelfrequenz ($f_{2n}$) heraufmischen und senden, sowie mit ersten Empfangsmitteln, welche Datenbursts (Mi→B) auf der zweiten Kanalmittenfrequenz ($f_{2n+1}$) empfangen und auf eine Zwischenfrequenz ($\Delta f$) herabmischen,

- eine zweite Station (Mi), mit zweiten Sendemitteln, welche Datenbursts (Mi→B) vom Basisband auf die zweite Kanalmittenfrequenz ($f_{2n+1}$) heraufmischen und senden, sowie mit zweiten Empfangsmitteln, welche Datenbursts (B→Mi) auf der ersten Kanalmittenfrequenz ($f_{2n}$) empfangen und auf die Zwischenfrequenz ($\Delta f$) herabmischen, wobei

- ein Frequenzsprung zwischen der für die Hinübertragung von der ersten zur zweiten Station Verwendeten ersten Kanalmittenfrequenz ($f_{2n}$) und der für die Rückübertragung von der zweiten zur ersten Station verwendeten zweiten Kanalmittenfrequenz ($f_{2n+1}$) der Höhe der Zwischenfrequenz ($\Delta f$) entspricht, und wobei

- die erste Station (B) einen lokalen Oszillator (LO) aufweist, welcher die für das Heraufmischen vom Basisband auf die erste Kanalmittenfrequenz ($f_{2n}$) und die für das Herabmischen von der zweiten Kanalmittenfrequenz ($f_{2n+1}$) auf die Zwischenfrequenz ($\Delta f$) benötigte lokale Frequenz ($f_{B,2n'}$, $f_{B,2n+1}$) erzeugt, und

- die zweite Station (Mi) einen lokalen Oszillator (LO) aufweist, welcher die für das Heraufmischen vom Basisband auf die zweite Kanalmittenfrequenz ($f_{2n+1}$) und die für das Herabmischen von der ersten Kanalmittenfrequenz ($f_{2n}$) auf die Zwischenfrequenz ($\Delta f$) benötigte lokale Frequenz ($f_{Mi,2n'}$, $f_{Mi,2n+1}$) erzeugt.

2. Datenübertragungssystem nach Anspruch 1, **dadurch gekennzeichnet, dass** die erste Kanalmittenfrequenz ($f_{2n}$) pseudozufällig gewählt wird.

3. Datenübertragungssystem nach einem der Ansprüche 1 oder 2, **dadurch gekennzeichnet, dass** die Datenübertragung entsprechend einem Frequenzsprungverfahren erfolgt, wobei die Kanalmittenfrequenz nach jedem übermittelten Datenburst geändert wird.

4. Datenübertragungssystem nach einem der vorhergehenden Ansprüche, **dadurch gekennzeichnet, dass** die Kanalmittenfrequenz ($f_{2n}$, $f_{2n+1}$) während der Übertragung eines Datenbursts konstant ist.

5. Datenübertragungssystem nach einem der vorhergehenden Ansprüche, **dadurch gekennzeichnet, dass** die Differenz zwischen erster Kanalmittenfrequenz ($f_{2n}$) und zweiter Kanalmittenfrequenz ($f_{2n+1}$) ein nicht ganzzahliges Vielfaches des Kanalabstands ist.

6. Datenübertragungssyetem nach einem der vorhergehenden Ansprüche, **dadurch gekennzeichnet, dass** die lokalen Oszillatoren (LO) mittels eines Phasenregelkreises frequenzstabilisiert werden.

7. Datenübertragungssystem nach einem der vorhergehenden Ansprüche, **dadurch gekennzeichnet, dass** das Datenübertragungssystem Mittel zum Erzeugen von Schutzzeitintervallen ($\Delta T1$, $\Delta T2$) zwischen den verschiedenen Datenbursts aufweist.

8. Datenübertragungssystem nach Anspruch 7, **dadurch gekennzeichnet, dass** die Länge des Schutzzeitintervalls ($\Delta T1$) zwischen der Hinübertragung von der ersten Station (B) zur zweiten Station (Mi) und der Rückübertragung von der zweiten Station (Mi) zur ersten Station (B) in etwa der Taktdrift der jeweiligen lokalen Oszillatoren entspricht.

9. Datenübertragungssystem nach einem der vorhergehenden Ansprüche, **dadurch gekennzeichnet, dass** die Stationen (B, Mi) Mittel zur Erzeugung einer Identifizierungsinformation (CAC) zu Beginn der Übertragung jedes Datenbursts aufweisen.

10. Datenübertragungssystem nach einem der vorhergehenden Ansprüche, **dadurch gekennzeichnet, dass** Übertragungsfrequenzen ($f_{2n}$, $f_{2n+1}$) innerhalb des ISM-Frequenzbands verwendet werden.

11. Datenübertragungssystem nach einem der vorhergehenden Ansprüche, **dadurch gekennzeichnet, dass** die erste Station (B) und die zweite Station (Mi) Teil eines Pikonetzes sind.

12. Datenübertragungssystem nach einem der vorhergehenden Ansprüche, **dadurch gekennzeichnet, dass** es sich bei einer der Stationen um eine Basisstation (B) und bei der anderen um eine Mobilstation (Mi) handelt.

13. Datenübertragungssystem nach einem der vorhergehenden Ansprüche, **dadurch gekennzeichnet, dass** das Datenübertragungssystem

- in schnurlosen Komnuunikationssystemen, oder
- in computergesteuerten Unterhaltungssystemen, insbesondere in computergesteuerten Spielesystemen einsetzbar ist.

**14.** Verfahren zur Datenübertragung zwischen mindestens zwei Stationen (B, Mi) über Funkstrecken unter Verwendung eines Frequenzsprungverfahrens, **gekennzeichnet durch** folgende Schritte:

a) Heraufmischen aus dem Basisband und Senden eines ersten Signals von einer ersten Station (B) zu einer zweiten Station (Mi) auf einer ersten Kanalmittenfrequenz ($f_{2n}$);
b) Empfangen des ersten Signals **durch** die zweite Station (Mi) und Herabmischen des ersten Signals auf eine Zwischenfrequenz ($\Delta f$);
c) Heraufmischen aus dem Basisband und Senden eines zweiten Signals von der zweiten Station (Mi) zu der ersten Station (B) auf einer zweiten Kanalmittenfrequenz ($f_{2n+1}$), die sich von der ersten Kanalmittenfrequenz ($f_{2n}$) um die Zwischenfrequenz ($\Delta f$) unterscheidet;
d) Empfangen des zweiten Signals **durch** die erste Station (B) und Herabmischen des zweiten Signals auf die Zwischenfrequenz ($\Delta f$), wobei

die für das Heraufmischen vom Basisband auf die erste Kanalmittenfrequenz ($f_{2n}$) und die für das Herabmischen Von der zweiten Kanalmittenfrequenz ($f_{2n+1}$) auf die Zwischenfrequenz ($\Delta f$) benötigte lokale Frequenz ($f_{B,2n}$, $f_{B,2n+1}$) von einem lokalen Oszillator (LO) der ersten Sation (B) erzeugt wird; und wobei
die für das Heraufmischen vom Basisband auf die zweite Kanalmittenfrequenz ($f_{2n+1}$) und die für das Herabmischen von der ersten Kanalmittenfrequenz ($f_{2n}$) auf die Zwischenfrequenz ($\Delta f$) benötigte lokale Frequenz ($f_{Mi,2n}$, $f_{Mi,2n+1}$) von einem lokalen Oszillator (LO) der zweiten Station (Mi) erzeugt wird.

**15.** Verfahren nach Anspruch 14,
**dadurch gekennzeichnet, dass** die erste Kanalmittenfrequenz ($f_{2n}$) pseudozufällig gewählt wird.

**16.** Verfahren nach Anspruch 14 oder 15,
**dadurch gekennzeichnet, dass** die Datenübertragung entsprechend einem Frequenzeprungverfahren erfolgt, wobei die Kanalmittenfrequenz nach jedem übermittelten Datenburst (B→Mi, Mi→B) geändert wird.

**17.** Verfahren nach einem der Ansprüche 14 bis 16,
**dadurch gekennzeichnet, dass** die Kanalmittenfrequenz ($f_{2n}$, $f_{2n+1}$) während der Übertragung eines Datenbursts konstant bleibt.

**18.** Verfahren nach einem der Ansprüche 14 bis 17,
**dadurch gekennzeichnet, dass** zwischen der Übertragung der verschiedenen Datenbursts

Schutzzeitintervalle ($\Delta T1$, $\Delta T2$) eingehalten werden.

**19.** Verfahren nach einem der Ansprüche 14 bis 18,
**dadurch gekennzeichnet, dass** als Zwischenfrequenz ($\Delta f$) ein nicht ganzzahliges Vielfaches des Kanalabstands gewählt wird.

**Claims**

**1.** Data transmission system, which has at least two stations (B, Mi) between which data bursts (B→Mi, Mi→B) are interchanged via radio, and which has:

- a first station (B), having first transmission means which up-mix data bursts (B→Mi) from baseband to a first channel mid-frequency ($f_{2n}$) and transmit them, and having first reception means which receive data bursts (Mi→B) at the second channel mid-frequency ($f_{2n+1}$) and down-mix them to an intermediate frequency ($\Delta f$),
- a second station (Mi), having second transmission means which up-mix data bursts (Mi→B) from baseband to the second channel mid-frequency ($f_{2n+1}$) and transmit them and having second reception means which receive data bursts (B→Mi) at the first channel mid-frequency ($f_{2n}$) and down-mix them to the intermediate frequency ($\Delta f$), in which
- a frequency hop between the first channel mid-frequency ($f_{2n}$) which is used for downlink transmission from the first to the second station and the second channel mid-frequency ($f_{2n+1}$) which is used for the uplink transmission from the second to the first station and whose magnitude corresponds to the magnitude of the intermediate frequency ($\Delta f$), and in which
- the first station (B) has a local oscillator (LO) which produces the local frequency ($f_{B,2n'}$, $f_{B,2n+1}$) which is required for up-mixing from baseband to the first channel mid-frequency ($f_{2n}$) and which is required for down-mixing from the second channel mid-frequency ($f_{2n+1}$) to the intermediate frequency ($\Delta f$), and
- the second station (Mi) has a local oscillator (LO), which produces the local frequency ($f_{Mi,2n'}$, $f_{Mi,2n+1}$) which is required for up-mixing from baseband to the second channel mid-frequency ($f_{2n+1}$) and which is required for down-mixing from the first channel mid-frequency ($f_{2n}$) to the intermediate frequency ($\Delta f$).

**2.** Data transmission system according to Claim 1,
**characterized in that**
the first channel mid-frequency ($f_{2n}$) is chosen on a pseudo-random basis.

3. Data transmission system according to Claims 1 or 2,
**characterized in that**
the data is transmitted using a frequency hopping method, with the channel mid-frequency being changed after each transmitted data burst.

4. Data transmission system according to one of the preceding claims,
**characterized in that** the channel mid-frequency $(f_{2n}, f_{2n+1})$ is constant during the transmission of a data burst.

5. Data transmission system according to one of the preceding claims,
**characterized in that**
the difference between the first channel mid-frequency $(f_{2n})$ and the second channel mid-frequency $(f_{2n+1})$ is a noninteger multiple of the channel separation.

6. Data transmission system according to one of the preceding claims,
**characterized in that**
the local oscillators (LO) are frequency-stabilized by means of a phase locked loop.

7. Data transmission system according to one of the preceding claims,
**characterized in that**
the data transmission system has means for producing guard time intervals $(\Delta T1, \Delta T2)$ between the various data bursts.

8. Data transmission system according to Claim 7,
**characterized in that**
the length of the guard time interval $(\Delta T1)$ between the downlink transmission from the first station (B) to the second station (Mi) and the uplink transmission from the second station (Mi) to the first station (B) corresponds approximately to the clock drift of the respective local oscillators.

9. Data transmission system according to one of the preceding claims,
**characterized in that**
the stations (B, Mi) have means for producing identification information (CAC) at the start of the transmission of each data burst.

10. Data transmission system according to one of the preceding claims,
**characterized in that**
transmission frequencies $(f_{2n}, f_{2n+1})$ within the ISM frequency band are used.

11. Data transmission system according to one of the preceding claims,
preceding claims,

**characterized in that**
the first station (B) and the second station (Mi) are part of a piconetwork.

12. Data transmission system according to one of the preceding claims,
**characterized in that**
one of the stations is a base station (B) and the other is a mobile station (Mi).

13. Data transmission system according to one of the preceding claims,
**characterized in that**
the data transmission system can be used

- in cordless communication systems, or
- in computer-controlled entertainment systems, in particular in computer-controlled games systems.

14. Method for data transmission between at least two stations (B, Mi) via radio paths using a frequency hopping method, **characterized by** the following steps:

a) up-mixing from baseband and transmission of a first signal from a first station (B) to a second station (Mi) at a first channel mid-frequency $(f_{2n})$;
b) reception of the first signal by the second station (Mi) and down-mixing of the first signal to an intermediate frequency $(\Delta f)$;
c) up-mixing from baseband and transmission of a second signal from the second station (Mi) to the first station (B) at a second channel mid-frequency $(f_{2n+1})$ which differs from the first channel mid-frequency $(f_{2n})$ by the intermediate frequency $(\Delta f)$; and
d) reception of the second signal by the first station (B) and down-mixing of the second signal to the intermediate frequency $(\Delta f)$, in which

the local frequency $(f_{B,2n}, f_{B,2n+1})$ which is required for up-mixing from baseband to the first channel mid-frequency $(f_{2n})$ and which is required for down-mixing from the second channel mid-frequency $(f_{2n+1})$ to the intermediate frequency $(\Delta f)$ is produced by a local oscillator (LO) in the first station (B); and in which the local frequency $(f_{Mi,2n}, f_{Mi,2n+1})$ which is required for up-mixing from baseband to the second channel mid-frequency $(f_{2n+1})$ and which is required for down-mixing from the first channel mid-frequency $(f_{2n})$ to the intermediate frequency $(\Delta f)$ is produced by a local oscillator (LO) in the second station (Mi).

15. Method according to Claim 14,
**characterized in that**

the first channel mid-frequency ($f_{2n}$) is chosen on a pseudo-random basis.

16. Method according to Claim 14 or 15, **characterized in that** the data is transmitted using a frequency hopping method, with the channel mid-frequency being changed after each transmitted data burst (B→Mi, Mi→B).

17. Method according to one of Claims 14 to 16, **characterized in that** the channel mid-frequency ($f_{2n}$, $f_{2n+1}$) remains constant during the transmission of a data burst.

18. Method according to one of Claims 14 to 17, **characterized in that** guard time intervals ($\Delta T1$, $\Delta T2$) are included between the transmission of the various data bursts.

19. Method according to one of Claims 14 to 18, **characterized in that** a non-integer multiple of the channel separation is chosen as the intermediate frequency ($\Delta f$).

**Revendications**

1. Système de transmission de données, qui comprend au moins deux stations (B, Mi) entre lesquelles des salves de données (B → Mi, Mi → B) sont échangées par radio et qui comporte :

   - une première station (B), avec des premiers moyens d'émission qui élèvent des salves de données (B → Mi) de la bande de base à une première fréquence moyenne de canal ($f_{2n}$) et qui les émettent ainsi qu'avec des premiers moyens de réception qui reçoivent des salves de données (Mi → B) sur la deuxième fréquence moyenne de canal ($f_{2n+1}$) et qui les abaissent à une fréquence intermédiaire ($\Delta f$),
   - une deuxième station (Mi), avec des deuxièmes moyens d'émission qui élèvent des salves de données (Mi → B) de la bande de base à la deuxième fréquence moyenne de canal ($f_{2n+1}$) et qui les émettent ainsi qu'avec des deuxièmes moyens de réception qui reçoivent des salves de données (B → Mi) sur la première fréquence moyenne de canal ($f_{2n}$) et qui les abaissent à la fréquence intermédiaire ($\Delta f$),
   - un saut de fréquence entre la première fréquence moyenne de canal ($f_{2n}$) utilisée pour la transmission aller de la première à la deuxième station et la deuxième fréquence moyenne de canal ($f_{2n+1}$) utilisée pour la transmission retour de la deuxième à la première station correspondant à la hauteur de la fréquence intermédiaire

   ($\Delta f$),
   - la première station (B) comportant un oscillateur local (LO) qui produit les fréquences locales ($f_{B,2n}$, $f_{B,2n+1}$) nécessaires respectivement à l'élévation de la bande de base à la première fréquence moyenne de canal ($f_{2n}$) et à l'abaissement de la deuxième fréquence moyenne de canal ($f_{2n+1}$) à la fréquence intermédiaire ($\Delta f$), et
   - la deuxième station (Mi) comportant un oscillateur local (LO) qui produit les fréquences locales ($f_{Mi,2n}$, $f_{Mi,2n+1}$) nécessaires respectivement à l'élévation de la bande de base à la deuxième fréquence moyenne de canal ($f_{2n+1}$) et à l'abaissement de la première fréquence moyenne de canal ($f_{2n}$) à la fréquence intermédiaire ($\Delta f$).

2. Système de transmission de données selon la revendication 1, **caractérisé par le fait que** la première fréquence moyenne de canal ($f_{2n}$) est choisie de façon pseudo-aléatoire.

3. Système de transmission de données selon l'une des revendications 1 ou 2, **caractérisé par le fait que** la transmission de données s'effectue selon un procédé à saut de fréquence, la fréquence moyenne de canal étant modifiée après chaque salve de données transmise.

4. Système de transmission de données selon l'une des revendications précédentes, **caractérisé par le fait que** la fréquence moyenne de canal ($f_{2n}$, $f_{2n+1}$) est constante pendant la transmission d'une salve de données.

5. Système de transmission de données selon l'une des revendications précédentes, **caractérisé par le fait que** la différence entre la première fréquence moyenne de canal ($f_{2n}$) et la deuxième fréquence moyenne de canal ($f_{2n+1}$) est un multiple non entier de l'espacement entre canaux.

6. Système de transmission de données selon l'une des revendications précédentes, **caractérisé par le fait que** les oscillateurs locaux (LO) sont stabilisés en fréquence au moyen d'une boucle à verrouillage de phase.

7. Système de transmission de données selon l'une des revendications précédentes, **caractérisé par le fait que** le système de transmission de données comporte des moyens pour produire des intervalles de temps de garde ($\Delta T1$, $\Delta T2$) entre les différentes salves de données.

**8.** Système de transmission de données selon la revendication 7,
**caractérisé par le fait que** la longueur de l'intervalle de temps de garde ($\Delta T1$) entre la transmission aller de la première station (B) à la deuxième station (Mi) et la transmission retour de la deuxième station (Mi) à la première station (B) correspond sensiblement à la dérive d'horloge des oscillateurs locaux respectifs.

**9.** Système de transmission de données selon l'une des revendications précédentes,
**caractérisé par le fait que** les stations (B, Mi) comportent des moyens pour la production d'une information d'identification (CAC) au début de la transmission de chaque salve de données.

**10.** Système de transmission de données selon l'une des revendications précédentes,
**caractérisé par le fait que** des fréquences de transmission ($f_{2n}$, $f_{2n+1}$) à l'intérieur de la bande de fréquence ISM (Industrielle, Scientifique et Médicale) sont utilisées.

**11.** Système de transmission de données selon l'une des revendications précédentes,
**caractérisé par le fait que** la première station (B) et la deuxième station (Mi) font partie d'un pico-réseau.

**12.** Système de transmission de données selon l'une des revendications précédentes,
**caractérisé par le fait que** l'une des stations est une station de base (B) et l'autre une station mobile (Mi).

**13.** Système de transmission de données selon l'une des revendications précédentes,
**caractérisé par le fait que** le système de transmission de données est utilisable

- dans des systèmes de communication sans fil, ou
- dans des systèmes de divertissement assistés par ordinateur, notamment dans des systèmes de jeu assistés par ordinateur.

**14.** Procédé pour la transmission de données entre au moins deux stations (B, Mi) par radio en utilisant un procédé à saut de fréquence,
**caractérisé par** les étapes suivantes :

a) élévation à partir de la bande de base et émission d'un premier signal par une première station (B) vers une deuxième station (Mi) sur une première fréquence moyenne de canal ($f_{2n}$) ;
b) réception du premier signal par la deuxième station (Mi) et abaissement du premier signal à une fréquence intermédiaire ($\Delta f$) ;
c) élévation à partir de la bande de base et émission d'un deuxième signal par la deuxième station (Mi) vers la première station (B) sur une deuxième fréquence moyenne de canal ($f_{2n+1}$) dont la différence par rapport à la première fréquence moyenne de canal ($f_{2n}$) est égale à la fréquence intermédiaire ($\Delta f$) ;
d) réception du deuxième signal par la première station (B) et abaissement du deuxième signal à la fréquence intermédiaire ($\Delta f$) ; les fréquences locales ($f_{B,2n}$, $f_{B,2n+1}$) nécessaires respectivement à

l'élévation de la bande de base à la première fréquence moyenne de canal ($f_{2n}$) et à l'abaissement de la deuxième fréquence moyenne de canal ($f_{2n+1}$) à la fréquence intermédiaire ($\Delta f$) étant produites par un oscillateur local (LO) de la première station (B) ; et
les fréquences locales ($f_{Mi,2n}$, $f_{Mi,2n+1}$) nécessaires respectivement à l'élévation de la bande de base à la deuxième fréquence moyenne de canal ($f_{2n+1}$) et à l'abaissement de la première fréquence moyenne de canal ($f_{2n}$) à la fréquence intermédiaire ($\Delta f$) étant produites par un oscillateur local (LO) de la deuxième station (Mi).

**15.** Procédé selon la revendication 14,
**caractérisé par le fait que** la première fréquence moyenne de canal ($f_{2n}$) est choisie de façon pseudo-aléatoire.

**16.** Procédé selon la revendication 14 ou 15,
**caractérisé par le fait que** la transmission de données s'effectue selon un procédé à saut de fréquence, la fréquence moyenne de canal étant modifiée après chaque salve de données transmise (B $\rightarrow$ Mi, Mi $\rightarrow$ B).

**17.** Procédé selon l'une des revendications 14 à 16,
**caractérisé par le fait que** la fréquence moyenne de canal ($f_{2n}$, $f_{2n+1}$) est constante pendant la transmission d'une salve de données.

**18.** Procédé selon l'une des revendications 14 à 17,
**caractérisé par le fait que** des intervalles de temps de garde ($\Delta T1$, $\Delta T2$) sont respectés entre les transmissions des différentes salves de données.

**19.** Procédé selon l'une des revendications 14 à 18,
**caractérisé par le fait qu'**un multiple non entier de l'espacement entre canaux est choisi comme fréquence intermédiaire ($\Delta f$).

**Fig. 1**

(Stand der Technik)

Fig.2

Fig. 3A

Fig. 3B